# EUROPÄISCHE PATENTSCHRIFT

(11) **EP 3 194 187 B1**
(45) Veröffentlichungstag und Bekanntmachung des Hinweises auf die Patenterteilung: **01.08.2018**
(21) Anmeldenummer: 15749834.6
(22) Anmeldetag: 14.08.2015
(51) Int. Cl.: B60G 7/00, B62D 21/11, B62D 21/15

(54) **AUS ZUSAMMENGESETZTEN METALL- UND KUNSTSTOFF-PROFILTEILE RADFÜHRENDER LENKER EINES FAHRZEUG-FAHRWERKS**
WHEEL-GUIDING LINK OF A VEHICLE CHASSIS, COMPOSED OF METAL AND PLASTIC PROFILE PARTS
BIELLE DE GUIDAGE DE ROUE D'UN MÉCANISME DE ROULEMENT D'UN VÉHICULE CONSTITUÉE D'ÉLÉMENTS PROFILÉS EN METAL ET EN MATIÈRE PLASTIQUE

(30) Priorität: 16.09.2014 DE 102014218601
(43) Veröffentlichungstag der Anmeldung: 26.07.2017
(73) Patentinhaber: Bayerische Motoren Werke Aktiengesellschaft, 80809 München (DE)
(72) Erfinder: KELLER, David, 80638 München (DE); TENHAEFF, Katja, 81373 München (DE)
(86) Internationale Anmeldenummer: PCT/EP2015/068739
(87) Internationale Veröffentlichungsnummer: WO 2016/041714

(56) Entgegenhaltungen:
- EP-A1- 2 711 214
- WO-A1-03/039892
- DE-A1- 19 522 916
- DE-A1- 19 911 121
- DE-A1-102012 218 686
- DE-A1-102013 004 010
- FR-A1- 2 439 095

## Beschreibung

Die Erfindung betrifft einen radführenden Lenker eines Fahrzeug-Fahrwerks mit zumindest einem stabförmigen Abschnitt, der in Form eines Hohlprofils in einem metallischen Werkstoff ausgeführt ist, und wobei Wandabschnitte des Lenkers eine knicklastreduzierende Ausformung aufweisen.

Zum Stand der Technik wird neben der DE 199 61 425 A1 auf die DE 199 11 121 A1 verwiesen, welche einen Lenker bzw. Lenkerarm nach dem Oberbegriff des Anspruchs 1 zeigt. Mit einem solchen Lenkerarm kann im Falle einer Zusammenstoßes des Fahrzeugs mit einem anderen Fahrzeug der Aufprall bzw. dessen Auswirkung vermindert werden.

In der vorstehend weiterhin genannten DE 199 61 425 A1 ist ein Kraftfahrzeugbauteil, beispielsweise ein Querlenker beschrieben, das bzw. der aus zusammengesetzten Strangpressprofilen besteht, welche ein offenes Hohlprofil (bspw. mit annähernd U-förmigem Querschnitt) bilden, in das aus Kunststoff geformte Versteifungsrippen in Form einer Fachwerkstruktur einsetzbar sind. Beschrieben ist in dieser Schrift weiterhin, dass ein solches Kraftfahrzeugbauteil ein "Baukastensystem" bilden kann, wobei die Versteifungsrippen belastungsabhängig differierende Wandstärken aufweisen und/oder aus unterschiedlichen Werkstoffen bestehen können.

Vorliegend wird unter einem stabförmigen offenen Hohlprofil jegliches eine Haupterstreckungsrichtung aufweisendes Bauteil oder jeglicher eine Haupterstreckungsrichtung aufweisender Abschnitt eines Bauteils verstanden, dessen senkrecht zur Haupterstreckungsrichtung betrachteter Querschnitt einen Hohlraum umgibt, aber dabei nicht vollständig geschlossen ist. Ein im weitesten Sinne U-förmiger Querschnitt ist ein typisches Beispiel für ein solches Hohlprofil.

Vorliegend soll ausgehend von der DE 199 11 121 A1 eine bauliche Verbesserung eines solchen Lenkers aufgezeigt werden.
Alternativ kann ausgehend von der DE 199 61 425 A1 mit der vorliegenden Erfindung aufgezeigt sein, wie das vorstehende genannte grundsätzlich bekannte Baukasten-Prinzip, wonach mithilfe unterschiedlicher Versteifungs-Kunststoff-Profilteile, die ein offenes metallisches Hohlprofil geeignet verstärken und das besagte Hohlprofil ein Gleichteil für verschiedene Einsatzfälle sein kann, in einer vorteilhaften Ausgestaltung für eine spezielle Bauart radförmiger Lenker genutzt werden kann
Die Lösung dieser vorstehend genannten Aufgabe(n) ergibt sich mit den Merkmalen des Anspruchs 1; vorteilhafte Aus- und Weiterbildungen sind Inhalt der Unteransprüche.

Radführende Lenker sollen nicht nur den üblichen auftretenden Belastungen Stand halten können bzw. entsprechende Kräfte geeignet weiterleiten, sondern sollen hinsichtlich höherer Überlast auch nicht überdimensioniert sein. Vielmehr ist erwünscht, dass ein radführender Lenker in einem stabförmigen Abschnitt, welcher auf Druck belastet ist, bei extrem hoher Druck-Überlast ausknickt, um zu verhindern, dass diese aufgrund eines besonderen Umstandes auftretende Überlast in weitere Bauteile des Fahrzeugs eingeleitet wird, wo sie größeren Schaden anrichten würde, als wenn lediglich ein radführender Lenker durch Knicken beschädigt wird. Fahrzeug-Baureihen (bspw. von Personenkraftwagen) mit zumindest bereichsweise baugleichem Fahrwerk - was auch als jedenfalls hinsichtlich des Lenkers vergleichbare Radführungs-Geometrie bezeichnet werden kann - können aber einzelne Modelle oder Fahrzeugtypen aufweisen, die bzw. deren radführende Lenker auf unterschiedlich hohe kritische Überlasten auszulegen sind, bei Auftreten derer der radführende Lenker oder ein (auf Druck belasteter) stabförmiger Abschnitt desselben ausknicken soll.

In diesem Sinne wird nun ein radführender Lenker mit den Merkmalen des Anspruchs 1 vorgeschlagen, d.h. ein radführender Lenker mit zumindest einem stabförmigen Abschnitt, der in Form eines offenen Hohlprofils in einem metallischen Werkstoff ausgeführt ist, welches offene Hohlprofil durch zumindest ein an Wandabschnitten desselben abgestütztes Kunststoff-Profilteil verstärkt ist, und dessen durch zumindest ein abgestütztes Kunststoff-Profilteil verstärkte Wandabschnitte eine knicklastreduzierende Ausformung aufweisen. Bei einer knicklastreduzierenden Ausformung handelt es sich dabei um eine solche Gestaltung des jeweiligen Wandabschnitts, dass der Lenker bzw. ein Abschnitt desselben bei Druck-Überlast gerade an dieser besonderen Gestaltung ausknickt. Die besagte Ausformung ist also solchermaßen gestaltet, dass deren maximale Knicklast, bei Auftreten derer ein Knicken erfolgt, geringer ist als die maximale Knicklast in einem (in o.g. Haupterstreckungsrichtung) benachbarten Bereich. Grundsätzlich ist eine solche knicklastreduzierte Ausformung auf verschiedene Weise darstellbar, so bspw. durch eine verringerte Wandstärke oder durch eine geeignete Formänderung des (senkrecht zur genannten Haupterstreckungsrichtung betrachteten) Querschnitts in diesem Bereich längs besagter Haupterstreckungsrichtung. Letztere ist bei einem stabförmigen Lenker oder einem stabförmigen Anschnitt eines radführenden Lenkers selbstverständlich die Längsrichtung dieses Lenkers oder dieses Lenker-Abschnitts.

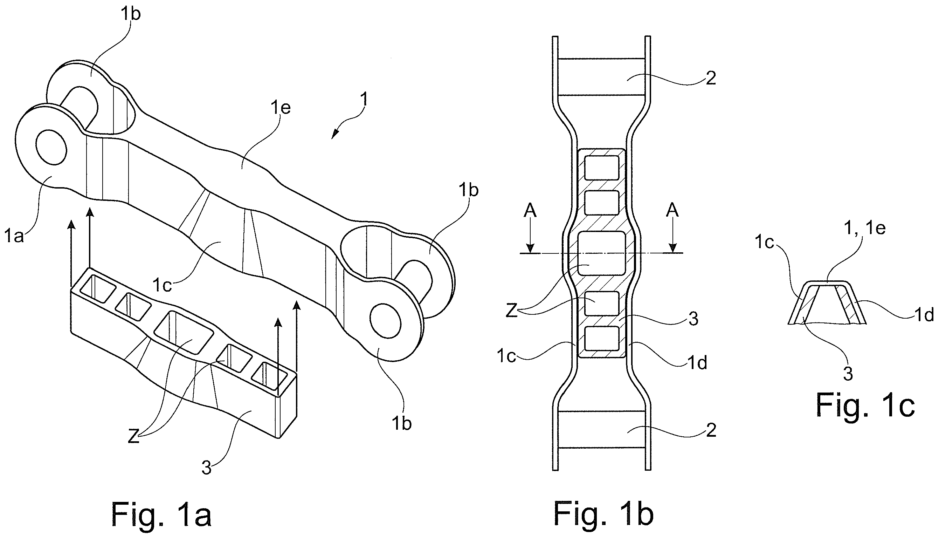

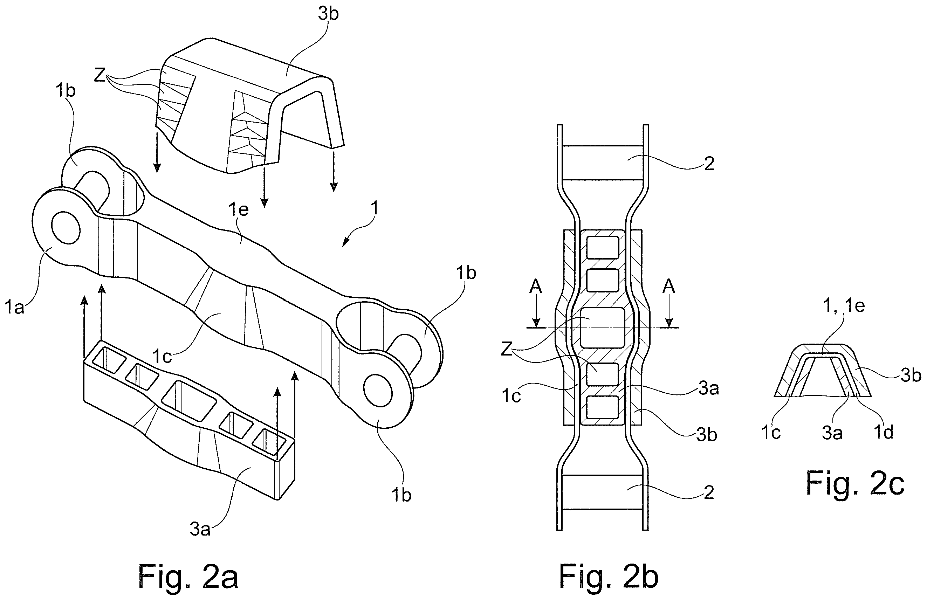

Eine solche mögliche Ausgestaltung bzw. Ausformung zeigen auch die beiden in den beigefügten Figurenfolgen 1, 2 lediglich prinzipiell dargestellten Ausführungsbeispiele der vorliegenden Erfindung. Ein erstes Ausführungsbeispiel ist in **Fig.1a** perspektivisch in nicht zusammengebautem Zustand dargestellt, während **Fig.1b** einen Längsschnitt (die Haupterstreckungsrichtung enthaltend) im zusammengebauten Zustand und **Fig.1c** den Schnitt A-A aus Fig.1b zeigt. Entsprechendes zeigen die **Figuren 2a, 2b, 2c** für ein zweites Ausführungsbeispiel.

Mit der Bezugsziffer 1 ist ein aus einem Metallwerkstoff bestehendes Hohlprofil gekennzeichnet, welches einen stabförmigen radförmigen Lenker im Fahrwerk eines Kraftfahrzeugs bzw. Personenkraftwagens bildet. An seinen beiden Enden ist dieses Hohlprofil 1 zu seitlichen Laschen 1a, 1b geformt, zwischen denen in dem Fachmann bekannter Weise jeweils ein in **Fig.1b** bzw. **Fig.2b** abstrakt dargestelltes Gummilager 2 oder dgl. eingesetzt ist, über welche der radführende Lenker zwischen zwei Bauteilen des Fahrzeug-Fahrwerks gelagert ist oder wird. Im sich zwischen diesen endseitigen Laschen 1a, 1b erstreckenden stabförmigen Bereich besitzt dieses Hohlprofil 1 einen im wesentlichen U-förmigen Querschnitt, wie **Fig.1c** bzw. **Fig.2c** zeigt. Dabei ist die die beiden Schenkel 1c, 1d des U-förmigen Querschnitts verbindende sog. Basis 1e über der Längsrichtung bzw. Haupterstreckungsrichtung des Hohlprofils 1 bzw. Lenkers unterschiedlich breit, wie aus dem Verlauf der Schenkel 1c, 1d gemäß **Fig.1b** bzw. **Fig.2b** hervorgeht.

Im wesentlichen mittig zwischen den beiden Gummilagern 2 in den Endabschnitten des Hohlprofils 1 weisen dessen die Schenkel 1c, 1d bildenden Wandabschnitte nämlich eine knicklastreduzierende Ausformung auf, die sich gemäß **Fig.1b** (bzw. **Fig.2b**) dadurch auszeichnet, dass die Basis 1e des Querschnitts in Haupterstreckungsrichtung betrachtet zunächst schmäler ist, dann etwas breiter wird und ihre maximale Breite im Schnitt A-A erlangt, um danach (gespiegelt zur Schnittlinie A-A) wieder etwas schmäler zu werden. Entsprechend sind die auf der Basis 1e näherungsweise (unter Vernachlässigung des in **Fig.1c****,** **2c**) sichtbaren Neigungswinkels - senkrecht stehenden Schenkel 1c, 1d an der Schnittlinie A-A und in deren nächsten Umgebung etwas weiter voneinander beabstandet als in einem Bereich der (in Haupterstreckungsrichtung betrachtet) etwa in der Mitte zwischen dieser Schnittlinie A-A und dem jeweiligen Gummilager 2 liegt. Im Bereich dieser soweit beschriebenen und figürlich dargestellten knicklastreduzierten Ausformung, welche aber auch andersartig (beispielweise durch MaterialSchwächung) ausgebildet sein kann, soll der Lenker bzw. das Hohlprofil 1 ausknicken, wenn zwischen den beiden Gummilagern 2 eine unzulässige hohe Druckkraft zu übertragen ist.

Das vorliegende Hohlprofil 1 soll dabei für unterschiedlich hohe unzulässige Druckkräfte verwendbar sein, d.h. bei Auftreten unterschiedlicher Druckkräfte ausknicken, womit dieses Hohlprofil 1 im Sinne eines Baukastens für verschiedene Fahrzeugtypen mit jedenfalls hinsichtlich dieses Lenkers vergleichbarer Radführungs-Geometrie einsetzbar wäre. Um dies darstellen zu können, ist ein Kunststoff-Profilteil 3, welches zumindest im Bereich der besagten knicklastreduzierten Ausformung in den offenen Querschnitt des Hohlprofils 1 eingesetzt ist, als weiterer Bestandteil des bzw. eines erfindungsgemäßen radführenden Lenkers vorgesehen. Dabei liegt dieses Kunststoff-Profilteil 3 zumindest an den Schenkeln 1c, 1d, welche aufgrund ihrer an die unterschiedlich breite Basis 1e angepassten Formgebung bei Überlast zum Ausknicken neigen, im Bereich der knicklastreduzierten Ausformung an.

Beim Ausführungsbeispiel der **Figuren 1a - 1c** ist ein einziges Kunststoff-Profilteil 3 vorgesehen, welches im von den Schenkeln 1c, 1d und der Basis 1e begrenzten Hohlraum des Hohlprofils 1 liegt, während beim Ausführungsbeispiel der **Figuren 2a - 2c** zwei Kunststoff-Profilteile 3a, 3b vorgesehen sind, von denen eines im Hohlraum des Hohlprofils 1 liegt und das andere dieses Hohlprofil 1 von außen umgreift. Wie bereits gesagt zeigen dabei die **Figuren 1a****,** **2a** den Lenker jeweils im nicht zusammengebauten Zustand, wenn das jeweilige Kunststoff-Profilteil 3 bzw. 3a, 3b noch nicht in das Hohlprofil 1 eingesetzt bzw. auf dieses aufgesetzt ist, welches Einsetzen bzw. Aufsetzen gemäß den jeweiligen Pfeilen in **Fig.1a** bzw. **Fig.2a** erfolgt. Danach liegt beim Ausführungsbeispiel der **Figuren 2a - 2c** ein verstärkendes und seinerseits einen U-förmigen Querschnitt aufweisendes Kunststoff-Profilteil 3b außenseitig zumindest an den die knicklastreduzierende Ausformung aufweisenden Wandabschnitten der Schenkel 1c, 1d des Hohlprofils 1 an, und es liegt bei beiden Ausführungsbeispielen ein verstärkendes Kunststoff-Profilteil 3 bzw. 3a innenseitig zumindest an den die knicklastreduzierende Ausformung aufweisenden Wandabschnitten der Schenkel 1c, 1d des Hohlprofils 1 an.

Für im Sinne eines Baukastensystems unterschiedliche radführende Lenker für verschiedene Fahrzeuge mit jedenfalls hinsichtlich dieses Lenkers vergleichbarer Radführungs-Geometrie sind dabei unterschiedlich geformte Kunststoff-Profilteile 3, 3a, 3b vorgesehen, die zumindest an den eine knicklastreduzierende Ausformung aufweisenden Wandabschnitten der Schenkel 1c, 1d des für all diese verschiedenen Fahrzeuge gleichen Hohlprofils 1 anliegen. Selbstverständlich können auch die beiden Ausführungsbeispiele solche unterschiedlichen Baukasten-Varianten darstellen, d.h. das Ausführungsbeispiel von **Fig.1a - 1c** ist auf eine niedrigere Knicklast ausgelegt, als das Ausführungsbeispiel nach den **Fig.2a - 2c****.** Es ist aber auch möglich, dass bspw. für das Ausführungsbeispiel der **Figuren 1a -1c** unterschiedlich lange (in Haupterstreckungsrichtung des Lenkers betrachtet) Kunststoff-Profilteile 3 ein solches Baukasten-System bilden. Schließlich können sich die verschiedenen Kunststoff-Profilteile 3 bzw. 3a, 3b auch durch ihre individuelle Gestaltung unterscheiden, welche sich vorliegend für die annähernd quaderförmigen Kunststoff-Profilteile 3, 3a wie ersichtlich dadurch auszeichnet, dass in diesen Profilteilen 3, 3a unterschiedlich gestaltete Material-Aussparungen Z vorgesehen sind. Diese Aussparungen Z reduzieren im Übrigen vorteilhafterweise das aufgrund der Tatsache, dass diese Profilteile 3, 3a, 3b in Kunststoff ausgeführt sind, bereits relativ geringe Gewicht eines erfindungsgemäßen radführenden Lenkers weiter. Selbstverständlich kann dabei faserverstärkter Kunststoff für diese Kunststoff-Profilteile 3, 3a, 3b zum Einsatz kommen.

Was die Verbindung zwischen dem bzw. den Kunststoff-Profilteil(en) 3, 3a, 3b und dem Hohlprofil 1 betrifft, so kann diese stoffschlüssig (bspw. durch Verkleben) und/oder formschlüssig (bspw. Clipsen) und/oder kraftschlüssig (bspw. durch Verschrauben) sein oder durch direktes Aufspritzen der dabei geformten Profilteile 3, 3a, 3b auf das Hohlprofil 1 dargestellt werden.

## Patentansprüche

1. Radführender Lenker eines Fahrzeug-Fahrwerks mit zumindest einem stabförmigen Abschnitt, der in Form eines Hohlprofils (1) in einem metallischen Werkstoff ausgeführt ist und wobei Wandabschnitte des Lenkers eine knicklastreduzierende Ausformung aufweisen,
**dadurch gekennzeichnet, dass** das Hohlprofil (1) offen ausgeführt und durch zumindest ein an Wandabschnitten desselben abgestütztes Kunststoff-Profilteil (3, 3a, 3b) verstärkt ist.

2. Lenker nach Anspruch 1, wobei ein verstärkendes Kunststoffprofilteil (3b) außenseitig an den Wandabschnitten anliegt und diese somit umgreift.

3. Lenker nach Anspruch 1 oder 2, wobei ein verstärkendes Kunststoff-profilteil (3, 3a) innenseitig an den Wandabschnitten anliegt.

4. Lenker nach einem der vorangegangen Ansprüche mit einem näherungsweise quaderförmigem Kunststoff-Profilteil (3, 3a) mit integrierten Aussparungen (Z).

5. Baukasten von hinsichtlich unterschiedlicher Knicklasten ausgelegter Lenker nach einem der vorangegangenen Ansprüche für verschiedene Fahrzeuge mit vergleichbarer Radführungs-Geometrie und gleichem Lenker-Hohlprofil (1) und unterschiedlichen Kunststoff-Profilteilen (3, 3a, 3b).

## Claims

1. A wheel-guiding link of a vehicle chassis, comprising at least one rod-shaped portion, which is produced in the form of a hollow profile (1) in a metallic material, and wherein wall portions of the link have a shaping that reduces buckling load,
**characterised in that** the hollow profile (1) is open and is reinforced by at least one plastics material profile part (3, 3a, 3b) supported on wall portions of said hollow profile.

2. A link according to claim 1, wherein a reinforcing plastics material profile part (3b) rests externally against the wall portions and thus extends around said wall portions.

3. A link according to claim 1 or 2, wherein a reinforcing plastics material profile part (3, 3a) rests internally against the wall portions.

4. A link according to any one of the preceding claims, with an approximately cuboid-shaped plastics material profile part (3, 3a) with integrated recesses (Z).

5. A kit of links according to any one of the preceding claims designed for different buckling loads for different vehicles, with a comparable wheel-guiding geometry and identical link hollow profile (1) and different plastics material profile parts (3, 3a, 3b).

## Revendications

1. Bras de suspension et de guidage de roue d'un mécanisme de roulement d'un véhicule comprenant au moins un segment en forme de barre qui est réalisé sous la forme d'un profilé creux (1) en un matériau métallique, des segments de paroi du bras de suspension ayant une déformation diminuant la charge de flambage,
**caractérisé en ce que**
le profilé creux (1) est ouvert et est renforcé par au moins une partie profilée en matériau synthétique (3, 3a, 3b) s'appuyant sur des segments de paroi de celui-ci.

2. Bras de suspension conforme à la revendication 1,
dans lequel une partie profilée en matériau synthétique de renfort (3b) s'applique extérieurement sur les segments de paroi et par suite les entoure.

3. Bras de suspension conforme à la revendication 1 ou 2,
dans lequel une partie profilée (3, 3a) en matériau synthétique de renfort s'applique intérieurement sur les segments de paroi.

4. Bras de suspension conforme à l'une des revendications précédentes,
comportant une partie profilée (3, 3a) en matériau synthétique de forme approximativement parallélépipédique dans laquelle sont intégrés des évidements (Z).

5. Caisson constitué par des bras de suspension réalisés en fonction de charges de flambage différentes conformes à l'une des revendications précédentes pour différents véhicules ayant des géométries de guidage de roues comparables à un profilé creux de bras oscillant (1) similaire et des parties profilées (3, 3a, 3b) en matériau synthétique différentes.
